**Europäisches Patentamt**

**European Patent Office**

**Office européen des brevets**

(11) Veröffentlichungsnummer: **0 143 876**
**A1**

(12) # EUROPÄISCHE PATENTANMELDUNG

(21) Anmeldenummer: **84106775.4**

(22) Anmeldetag: **14.06.84**

(51) Int. Cl.⁴: **B 29 C 33/02**

(30) Priorität: **13.07.83 DE 3325310**

(43) Veröffentlichungstag der Anmeldung:
**12.06.85 Patentblatt 85/24**

(84) Benannte Vertragsstaaten:
**DE FR GB IT**

(71) Anmelder: **METZELER KAUTSCHUK GMBH**
**Gneisenaustrasse 15**
**D-8000 München 50(DE)**

(72) Erfinder: **Härtel, Volker, Dr.**
**Fichtenstrasse 50**
**D-8034 Germering(DE)**

(72) Erfinder: **Rachel, Josef**
**Erikastrasse 13a**
**D-8190 Wolfratshausen(DE)**

(74) Vertreter: **Michelis, Theodor, Dipl.-Ing.**
**Gneisenaustrasse 15**
**D-8000 München 50(DE)**

(54) **Vorrichtung zur Herstellung von Formteilen aus Formmassen.**

(57) Eine Vorrichtung zur Herstellung von Formteilen aus Formmassen mittels eines üblichen Formwerkzeuges weist eine Heizeinrichtung mit zwei an dem Formwerkzeug befestigten, aufeinanderliegenden Heizplatten (18,20) auf; in der Berührungsfläche mindestens einer Heizplatte (18,20) sind Nuten (22a,22b,24a,24b) ausgebildet, in denen elektrische Rohrheizkörper (26a,26b,27a,27b) mit Metallmantel im Preßsitz angeordnet sind. Durch entsprechende Anpassung der Form und der Zahl der Heizkörper pro Flächeneinheit lassen sich gewünschte Temperaturprofile und insbesondere eine sehr gleichmäßige, reproduzierbare mittlere Temperatur im Bereich des Formhohlraums erreichen.

FIG.1

METZELER KAUTSCHUK GMBH         München, den 6.6.1984
München         —1—         MK 325 P 83 EP

## Vorrichtung zur Herstellung von Formteilen aus Formmassen

Die Erfindung betrifft eine Vorrichtung zur Herstellung von Formteilen aus Formmassen der im Oberbegriff des Anspruchs 1 angegebenen Gattung.

Die Formwerkzeuge solcher Vorrichtungen werden im allgemeinen indirekt durch elektrische Energie, Dampf oder mit flüssigen Medien, beispielsweise Öl, geheizt. Dabei können beispielsweise in der Basis des Formwerkzeugs Bohrungen vorgesehen sein, durch die Wasserdampf oder erwärmtes Öl strömt. Nachteilig ist hierbei, daß diese Bohrungen exakt abgedichtet werden müssen; außerdem können nur geradlinige Bohrungen verwendet werden, so daß die Anpassung an unterschiedliche Heizkennlinien, bezogen auf die zu erwärmende Fläche, nicht möglich ist. Insbesondere wird es problematisch, pro Flächeneinheit eine sehr exakte Wärmemenge zu erzeugen.

Weiterhin ist es bekannt, sogenannte "Heizpatronen" in Paßbohrungen, die im allgemeinen als Sackbohrungen ausgeführt sind, einzusetzen. Solche Heizpatronen brennen jedoch relativ oft fest, so daß die Auswechslung defekter Heizpatronen kompliziert ist. Außerdem können auch hierbei wieder nur Sackbohrungen mit geradlinigem Verlauf verwendet werden, so daß die Anpassung an unterschiedliche Wärmekennlinien nicht möglich ist.

Der Erfindung liegt deshalb die Aufgabe zugrunde, eine Vorrichtung zur Herstellung von Formteilen aus Formmassen der angegebenen Gattung zu schaffen, bei der die oben erwähnten Nachteile nicht auftreten.

Insbesondere soll eine Vorrichtung vorgeschlagen werden, die eine sehr gleichmäßige, genaue und reproduzierbare Erwärmung des Formhohlraums gewährleistet.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß direkt an dem eigentlichen Formwerkzeug elektrisch erwärmte Heizplatten angebracht sind, in deren Trennebenen Nuten eingearbeitet sind; in diese Nuten werden Rohrheizkörper mit Metallmantel eingelegt, wobei das jeweils geeignete Metall in Abhängigkeit von den jeweils zulässigen Rohrmantel-Temperaturen ausgewählt werden kann.

Solche Rohrheizkörper weisen in dem Metallmantel ein spiralförmig gewickeltes Widerstandselement auf, das wiederum durch hochverdichtetes Magnesiumoxid umgeben ist.

Diese Rohrheizkörper können entsprechend der Form der Nuten verbogen werden, wobei die Form der Nuten wiederum den speziellen, gewünschten Erwärmungskennlinien angepaßt werden kann.

Die Rohrheizkörper werden im Preßsitz in den Nuten angeordnet, so daß ein optimaler Wärmeübergang zwischen Rohrheizkörper und Heizplatten gewährleistet ist. Die installierte Heizleistung wird durch die Zahl und die Länge der Rohrheizkörper bestimmt.

- 3 -                                    0143876

Indem Nuten in beiden Berührungsflächen ausgebildet werden, wird es möglich, die Rohrheizkörper in unterschiedlichen Abständen vom Formwerkzeug anzuordnen; dadurch lassen sich Temperaturspitzen abbauen und der Einfluß von Wärmestaus ausschalten, wodurch, auf die gesamte Fläche des Formwerkzeugs gesehen, sehr gleichmäßige Temperaturbedingungen, also nur geringe Temperaturschwankungen um einen Mittelwert, erreicht werden können.

Zweckmäßigerweise wird in den Randzonen der Heizplatten die pro $cm^2$ erzeugte Heizleistung erhöht, indem in diesen Bereichen mehrere Rohrheizkörper angeordnet werden. Auf diese Weise lassen sich die Strahlungsverluste kompensieren, die am Rand der Heizplatten auftreten.

Aus diesem Grunde sollten die Rohrheizkörper in den Randbereichen auch einen geringeren Abstand vom Formwerkzeug haben, d. h., sich in der Berührungsfläche der oberen Heizplatte befinden.

In der Mitte der Heizplatten und damit des Formwerkzeugs sind die Strahlungsverluste geringer, so daß in diesem Bereich die Rohrheizkörper einen größeren Abstand vom Formwerkzeug haben können. Es bietet sich deshalb an, die Rohrheizkörper in der Berührungsfläche der von dem Formwerkzeug entfernten Heizplatte anzuordnen.

Zweckmäßigerweise werden die Rohrheizkörper als offene Schleife in die entsprechenden Nuten eingelegt, wobei jedem Rohrheizkörper ein eigener Regelkreis mit einem Temperaturfühler zugeordnet ist, der sich so nahe wie möglich am Formhohlraum befinden sollte.

Dadurch lassen sich im Formhohlraum genaue und reproduzierbare Temperaturen und damit entsprechend gleichmäßige Vulkanisationszeiten erreichen, wenn eine solche Vorrichtung zur Vulkanisation von Kautschukmischungen eingesetzt wird. Strahlungsverluste, Wärmeleitung, Massen- bzw. Größenunterschiede beeinflussen den Heizprozess nicht mehr.

Zweckmäßigerweise werden die außenliegenden Rohrheizkörper einerseits und die innenliegenden Rohrheizkörper andererseits parallel zusammengeschaltet und an einen eigenen Regelkreis angeschlossen, so daß es möglich wird, diese Rohrheizkörper unabhängig voneinander zu steuern.

Außerdem können die Rohrheizkörper temperaturabhängig in Stufen geschaltet werden, um die Aufheizzeit möglichst kurz zu machen und den Energieverbrauch möglichst gering zu halten, weil beim Anfahren nun die volle Heizleistung benutzt werden kann und Verluste mittels niedriger Grundlast kompensiert werden können.

Ein weiterer Vorteil liegt in der einfachen und billigen Herstellung der Heizplatten, die keine exakten Paßbohrungen mehr enthalten müssen; weiterhin können preiswerte, ohne Probleme in verschiedenen Ausführungsformen erhältliche Standard-Heizelemente, nämlich Rohrheizkörper mit Metallmantel, verwendet werden, deren Form ohne Probleme der gewünschten Temperaturkennlinie angepaßt werden kann. Auch die Wartung dieser Heizvorrichtung bereitet keine Probleme, da die Rohrheizkörper ohne weiteres aus den offenen Nuten herausgenommen und gegebenenfalls ausgetauscht werden können.

Durch entsprechende Auslegung der Nuten bzw. der Zahl und der Länge der Rohrheizkörper läßt sich diese Heizvorrichtung jeder gewünschten Größenordnung von Formhohlraum und/ oder Heizleistung anpassen, so daß diese Vorrichtung sowohl in Vulkanisationspressen als auch in anderen Formvorrichtungen eingesetzt werden kann.

Die Erfindung wird im folgenden anhand von Ausführungsbeispielen unter Bezugnahme auf die beiliegenden, schematischen Zeichnungen näher erläutert. Es zeigen

Fig. 1 einen Schnitt durch die wesentlichen Teile einer Vorrichtung zur Herstellung von Formteilen aus Formmassen, und

Fig. 2 eine Ansicht der Heizvorrichtung.

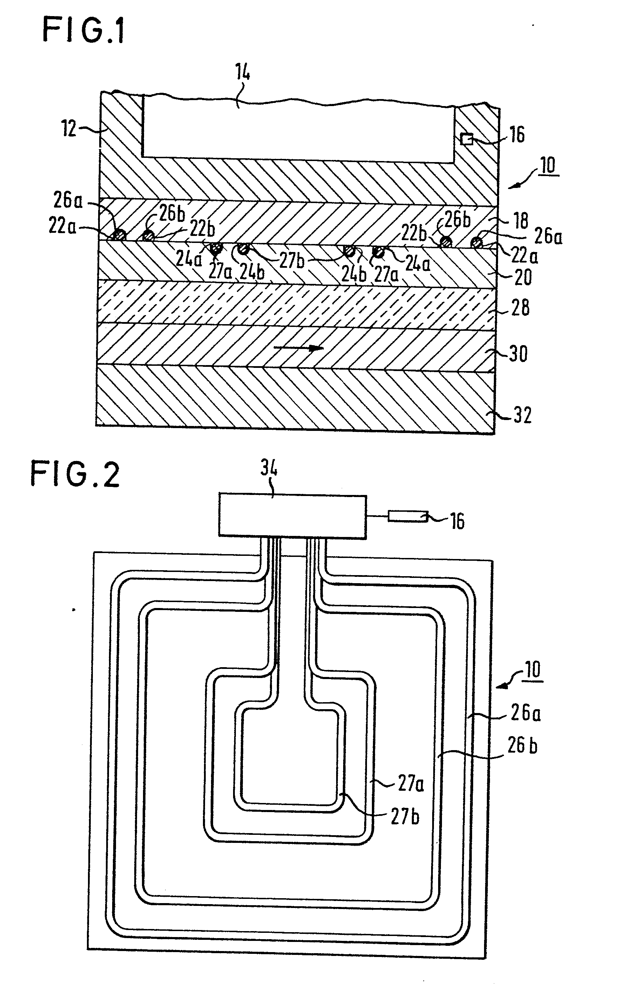

Wie man in Fig. 1 erkennt, weist eine allgemein durch das Bezugszeichen 10 angedeutete Vorrichtung zur Herstellung von Formteilen aus Formmassen eine Pressengrundplatte 32, eine Ausschiebeplatte 30, eine Isolierplatte 28, zwei Heizplatten 20 und 18 sowie das eigentliche Formwerkzeug 12 mit dem Formhohlraum 14 auf. Dieses Formwerkzeug 12 ist längs einer nicht dargestellten Trennlinie teilbar, so daß es geöffnet und das fertige Formteil entnommen werden kann.

Die beiden Heizplatten 18 und 20 sind, beispielsweise durch Schrauben (nicht dargestellt), fest mit dem Formwerkzeug 12 verbunden und weisen an ihren Berührungsflächen Nuten auf, nämlich die Nuten 22a, 22b in der Berührungsfläche der dem Formwerkzeug 12 zugewandten, oberen Heizplatte 18 sowie Nuten 24a, 24b in der Berührungsfläche der unteren Heizplatte 20.

In diesen Nuten 22a, 22b, 24a, 24b sind elektrische Rohrheizkörper mit Metallmantel im Preßsitz angeordnet, um einen guten Wärmeübergang von den Rohrheizkörpern 26a, 26b, 27a, 27b auf die entsprechenden Heizplatten 18, 20 zu gewährleisten.

Wie man in Fig. 2 erkennt, haben die Nuten 22a, 22b, 24a, 24b und dementsprechend auch die Rohrheizkörper 26a, 26b, 27a, 27b die Form von etwa rechteckigen Schleifen, die konzentrisch zueinander angeordnet sind; dabei befinden sich die außenliegenden Nuten 22a, 22b und die entsprechenden Rohrheizkörper 26a, 26b in der Berührungsfläche der oberen, dem Formwerkzeug 18 zugewandten Heizplatte 18, um auf diese Weise die Strahlungsverluste von den Außenflächen der Heizplatten bzw. des Formwerkzeugs zu kompensieren. Die innenliegenden Nuten 24a, 24b und dementsprechend auch die zugehörigen Rohrheizkörper 27a, 27b befinden sich in der Berührungsfläche der unteren Heizplatte 20, da in diesem Bereich die Strahlungsverluste geringer sind und deshalb der geringe Abstand zwischen Wärmequelle und Formwerkzeug 12 nicht erforderlich ist.

Die installierte Heizleistung wird durch die Zahl und die Länge der Rohrheizkörper bestimmt, während durch die räumliche Anordnung der Nuten und der zugehörigen Rohrheizkörper eine genau definierte, gleichmäßige Temperatur über die gesamte Fläche des Formhohlraums 14 erreicht werden kann.

In einem möglichst geringen Abstand vom Formhohlraum 14 befindet sich in dem Formwerkzeug 12 ein Temperaturfühler 16, der mit einem Regelkreis 34 für die Rohrheizkörper 26a, 26b, 27a, 27b verbunden ist.

Als Alternative zu der dargestellten Ausführungsform kann auch für jeden Rohrheizkörper ein eigener Regelkreis mit zugehörigem Temperaturfühler 16 im Formwerkzeug 12 vorgesehen sein. In diesem Fall sollten die außenliegenden Rohrheizkörper einerseits und die innenliegenden Rohrheizkörper andererseits parallel zu einem eigenen Regelkreis zusammengeschaltet sein.

Es ist auch möglich, die Rohrheizkörper 26a, 26b, 27a, 27b temperaturabhängig in Stufen zu schalten, um die Aufheizzeit möglichst kurz zu machen und den Energieverbrauch zu optimieren; beim Anfahren kann dann mit voller Heizleistung gearbeitet werden, wobei die dabei auftretenden Verluste durch die relativ niedrige Grundlast kompensiert werden können.

Patentansprüche

1. Vorrichtung zur Herstellung von Formteilen aus Formmassen

a) mit einem allseitig geschlossenen, teilbaren Formwerkzeug mit dem Formhohlraum, und

b) mit einer mit dem Formwerkzeug verbundenen Heizeinrichtung,

d a d u r c h   g e k e n n z e i c h n e t ,   daß

c) die Heizeinrichtung zwei an dem Formwerkzeug (12)
befestigte, aufeinanderliegende Heizplatten (18,
20) aufweist, daß

d) in der Berührungsfläche mindestens einer Heizplatte
(18, 20) Nuten (22a, 22b, 24a, 24b) ausgebildet sind,
und daß

e) in den Nuten (22a, 22b, 24a, 24b) elektrische Rohrheizkörper mit Metallmantel (26a, 26b, 27a, 27b)
im Preßsitz angeordnet sind.

2. Vorrichtung nach Anspruch 1, dadurch gekennzeichnet, daß
die Nuten (22a, 22b, 24a, 24b) als offene Schleife ausgebildet sind, und daß die entsprechend gebogenen Rohrheizkörper (26a, 26b, 27a, 27b) in den Nuten (22a, 22b, 24a,
24b) angeordnet sind.

3. Vorrichtung nach einem der Ansprüche 1 oder 2, dadurch
gekennzeichnet, daß Nuten (22a, 22b, 24a, 24b) in den Berührflächen beiden Heizplatten (18, 20) vorgesehen sind.

4. Vorrichtung nach Anspruch 3, dadurch gekennzeichnet,
daß die Nuten (22a, 22b, 24a, 24b) in mehreren, zueinander näherungsweise konzentrischen Schleifen angeordnet sind, und daß die Nuten (22a, 22b) in der Berührungsfläche der dem Formwerkzeug (12) zugewandten Heizplatte (18) außen und die Nuten (24a, 24b) in der Berührungsfläche der anderen Heizplatte (20) innen liegen.

5. Vorrichtung nach einem der Ansprüche 1 bis 4 dadurch gekennzeichnet, daß die außen liegenden Rohrheizkörper (26a, 26b) bzw. die innen liegenden Rohrheizkörper (27a, 27b) parallel zusammengeschaltet und mit einem eigenen Regelkreis (34) verbunden sind.

6. Vorrichtung nach Anspruch 5, dadurch gekennzeichnet, daß jeder Regelkreis (34) einen Temperaturfühler (16) in der Nähe des Formhohlraums (14) aufweist.

FIG.1

FIG.2

Europäisches
Patentamt

## EUROPÄISCHER RECHERCHENBERICHT

| | EINSCHLÄGIGE DOKUMENTE | | EP 84106775.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 017 559 (JOOS) <br> * Gesamt * | 1,3 | B 29 C 33/02 |
| A | | 2,4,5 | |
| | -- | | |
| A | DE - A1 - 2 711 558 (WERNER & PFLEIDERER) <br> * Gesamt * | 5,6 | |
| | -- | | |
| A | DE - A1 - 2 332 672 (SIEMENS) <br> * Gesamt * | | |
| | ---- | | |

| RECHERCHIERTE SACHGEBIETE (Int. Cl.4) |
|---|
| B 29 C |
| B 29 F |
| B 29 G |
| B 29 H |

Der vorliegende Recherchenbericht wurde für alle Patentansprüche erstellt.

| Recherchenort | Abschlußdatum der Recherche | Prüfer |
|---|---|---|
| WIEN | 30-11-1984 | MAYER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82